(19) Europäisches Patentamt

European Patent Office

Office européen des brevets

(11) **EP 0 898 385 B1**

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(51) Int Cl.⁷: **H04B 7/26**, H04Q 7/20, H04Q 7/28

(21) Anmeldenummer: **98202686.6**

(22) Anmeldetag: **11.08.1998**

(54) **Kommunikationssystem mit mehreren Funksystemen**

Communication system with a plurality of radio systems

Système de communication comportant une pluralité de systèmes radio

(84) Benannte Vertragsstaaten:
**DE FR GB**

(30) Priorität: **16.08.1997 DE 19735527**

(43) Veröffentlichungstag der Anmeldung:
**24.02.1999 Patentblatt 1999/08**

(73) Patentinhaber:
• **Philips Intellectual Property & Standards GmbH**
  **20099 Hamburg (DE)**
  Benannte Vertragsstaaten:
  **DE**
• **Koninklijke Philips Electronics N.V.**
  **5621 BA Eindhoven (NL)**
  Benannte Vertragsstaaten:
  **FR GB**

(72) Erfinder: **Du, Yonggang, Dr.-Ing**
**Röntgenstrasse 24, 22335 Hamburg (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
**WO-A-95/27338**

**Beschreibung**

Die Erfindung bezieht sich auf eine Kommunikationssystem mit mehreren Funksystemen, welche wenigstens eine Funkstation enthalten. Die Funkstation prüft vor einer Nutzsignalübertragung, ob ein bestimmter Teilfrequenzbereich innerhalb eines vorgegebenen Frequenzbereiches frei ist.

Aus dem Dokument "R.O. LaMaire und A. Krishna: On the Advantages and Disadvantages of Some Options for Sharing Etiquettes in the 5.15-5.35 GHz Band, 5 GHz Sharing Rules Drafting Committee, SRDC/10.28.96.13B, November 14, 1996" ist ein Funksystem bekannt, welches im 5 GHz-Band nach der LBT-Methode (LBT = Listen-Before-Talk) arbeitet. Funkstationen, welche z.B. ein CDMA- oder TDMA-Verfahren anwenden, können einen Teil eines vorgegebenen Spektrums oder Frequenzbereiches belegen. Hierbei ist zuerst erforderlich, daß eine Funkstation prüft, ob ein Teilfrequenzbereich frei ist. Dies wird durch eine Energiedetektion im gewünschten Teilfrequenzbereich ermittelt. Falls die Funkstation feststellt, daß der bestimmte Teilfrequenzbereich frei ist und damit keine andere Funkstation den bestimmten Teilfrequenzbereich zur Signalübertragung verwendet, wird dieser Teilfrequenzbereich zur Nutzsignalübertragung belegt. Es kann jedoch vorkommen, daß zwei Funkstationen gleichzeitig den bestimmten Teilfrequenzbereich belegen. In diesem Fall kann aufgrund der gleichzeitigen Belegung des Teilfrequenzbereiches durch beispielsweise zwei Funkstationen eine ordnungsgemäße Nutzsignalübertragung nicht stattfinden.

Aus dem Dokument WO 95/27338 A1 ist noch ein Verfahren und eine Vorrichtung zur Detektion und zur Handhabung von Kollisionen in einem Funkkommunikationssystem mit mehreren Funkstationen bekannt. Kollisionen können dann auftreten, wenn wenigstens zwei Funkstationen gleichzeitig auf einen Kanal zugreifen wollen.

Der Erfindung liegt die Aufgabe zugrunde, ein anderes Kommunikationssytem mit mehreren Funksystemen zu schaffen.

Die Aufgabe wird bei einem Kommunikationssystem mit mehreren Funksystemen der eingangs genanten Art durch folgende Maßnahmen gelöst:
Die Funkstation eines Funksystem ist

-    in einer ersten Phase jeweils vor einer Nutzsignalübertragung zur Prüfung vorgesehen, ob ein bestimmter Teilfrequenzbereich innerhalb eines vorgegebenen Frequenzbereiches für eine gewählte Größe einer Funkausbreitungszone frei ist,
-    in einer zweiten Phase, falls der bestimmte Teilfrequenzbereich für die gewählte Größe der Funkausbreitungszone frei ist, wenigstens zur Aussendung von zwei auf den bestimmtem Teilfrequenzbereich begrenzten Impulsen zu zufälligen Zeitpunkten und zur Kollisionsvermeidung vorgesehen, falls ein anderes Funksystem den bestimmten Teilfrequenzbereich in einer überlappenden Funkausbreitungszone zum gleichen Zeitpunkt belegt hat, und

in einer dritten Phase, falls der bestimmte Teilfrequenzbereich für die gewählte Größe der Funkausbreitungszone frei ist und keine Kollision detektierbar ist, wenigstens zur Aussendung von auf den bestimmten Teilfrequenzbereich begrenzte Nutzsignale vorgesehen.

In einem Kommunikationssystem oder einer Kommunikationsumgebung mit mehreren Funksystemen müssen sich diese Funksysteme zur Nutzsignalübertragung einen vorgegebenen Frequenzbereich teilen. Ein solches Funksystem kann eine Basisstation mit mehreren Mobilstationen oder z.B. Feststationen eines Richtfunksystems sein. Ein Funksystem muß, bevor es Nutzsignale überträgt, zuerst für eine bestimmte gewählte Größe seiner Funkausbreitungszone überprüfen, ob der gewählte Teilfrequenzbereich innerhalb des vorgegebenen Frequenzbereiches belegt ist. Nachdem eine Funkstation in einer ersten Phase festgestellt hat, daß ein Teilfrequenzbereich frei ist, wird in eine zweite Phase gewechselt, in der von der Funkstation Impulse zu zufälligen Zeitpunkten ausgesendet werden. Die Impulse sind bandbegrenzt und weisen eine mittlere Energie über einen bestimmten Zeitraum an der Peripherie der Funkausbreitungszone auf, durch die andere Funksysteme nicht gestört sind, wenn sie keine überlappenden Funkausbreitungszonen aufweisen. Mit der Aussendung der Impulse zeigt die Funkstation anderen Funkstationen an, daß sie den Teilfrequenzbereich belegen möchte, auf den die Impulse begrenzt sind. Stellt die Funkstation fest, daß eine andere Funkstation mit einer überlappenden Funkausbreitungszone ebenfalls auf diesen bestimmten Teilfrequenzbereich auf die gleiche Weise erzeugte Impulse aussendet, wird die zweite Phase beendet, weil eine Kollision vorliegt und diese durch ein Zurückgehen in die erste Phase vermieden wird. Falls die Funkstation ermittelt, daß der bestimmte Teilfrequenzbereich frei ist, wird in die dritte Phase gewechselt, in der Nutzsignale ausgesendet werden. Durch die erfindungsgemäßen Maßnahmen können auch bei gleichzeitigem Zugriff auf einen Teilfrequenzbereich durch zwei oder mehr Funksysteme, wenn sich deren Funkausbreitungszonen überlappen, Kollisionen verhindert werden.

Die Größe der Funkausbreitungszone des Funksystems wird wenigstens durch die abgestrahlte Energie einer Funkstation des Funksystems bestimmt. Diese Funkstation erkennt einen Teilfrequenzbereich als frei, wenn einerseits die abgestrahlte Energie außerhalb seiner Funkausbreitungszone so schwach ist, daß eine Störung eines anderen Funksystems nicht vorliegt, und andererseits das eigene Funksystem innerhalb der Funkausbreitungszone nicht durch die abgestrahlte Energie eines anderen Funksystems gestört wird.

Die Funkstation ist nach der Feststellung in der ersten Phase, daß der bestimmte Teilfrequenzbereich innerhalb des vorgegebenen Frequenzbereiches für die gewählte Größe einer Funkausbreitungszone belegt ist, nach einem zufällig bestimmten Zeitraum zur erneuten Prüfung entweder mit einer verminderten Größe der Funkausbreitungszone des Funksystems oder mit einem anderen Teilfrequenzbereiches vorgesehen ist.

Wenn die mittlere abgestrahlte Energie der Funkstation während eines vorgegebenen Zeitraumes geringer als die Energie ist, durch welche die Größe der Funkausbreitungszone bestimmt wird, sendet die Funkstation in der dritten Phase zusätzlich zu den Nutzsignalen noch Impulse aus.

Damit jedes Funksystem einen Detektionsprozeß auf die gleiche Weise durchführen kann, ist jeweils wenigstens eine Funkstation jedes Funksystems zur Speicherung der mittleren Energie über einen vorgegebenen Zeitraum an der Peripherie einer Funkausbreitungszone, des vorgegebenen Zeitraums und des minimalen und maximalen Zeitpunkts zwischen zwei aufeinanderfolgenden Impulsen zumindest während der zweiten Phase vorgesehen.

Die die Größe einer Funkausbreitungszone bestimmende Funkstation bestimmt über eine geschätzte oder empirisch ermittelte Formel die abzustrahlende mittlere Energie über einen vorgegebenen Zeitraum, damit an der Peripherie der Funkausbreitungszone der jedem Funksystem bekannte Schwellwert vorliegt. Auf ähnliche Weise wird von einer Funkstation die Störenergie von wenigstens einem anderen Funksystem bestimmt, wie dies in Anspruch 7 angegeben ist.

Ein Funksystem kann beispielsweise eine Basisstation und mehrere Mobilstationen enthalten. Eine Mobilstation kann nur mit anderen Mobilstationen oder der Basisstation desselben Funksystems kommunizieren, wenn diese sich innerhalb der Funkausbreitungszone befindet. Daher führt jede Funkstationen (z.B. Mobilstation) eines Funksystems eine Energiedetektion durch. Eine Funkstation ist nur dann zur Kommunikation mit anderen Funkstationen des Funksystems vorgesehen, wenn die Energiedetektion ergibt, daß die Funkstation sich innerhalb der Funkausbreitungszone des Funksystems befindet.

Der Aufbau einer Funkstation ist in Anspruch 9 angegeben.

Die Erfindung bezieht sich auch auf eine Funkstation eines Funksystems und ein Verfahren zur Belegung eines Teilfrequenzbereiches in einem vorgegebenen Frequenzbereich durch ein zu einer Kommunikationsumgebung gehörendes Funksystem.

Ausführungsbeispiele der Erfindung werden nachstehend anhand der Fig. näher erläutert. Es zeigen:

Fig. 1      eine Kommunikationsumgebung mit mehreren Funksystemen,

Fig. 2      schematisch dargestellte Funkausbreitungszonen der Funksysteme nach Fig. 1,

Fig. 3      ein durch die Funksysteme nach Fig. 1 zu belegender Frequenzbereich,

Fig. 4      eine Funkausbreitungszone eines aktiven Funksystems und eine aufzubauende Funkausbreitungszone eines in den aktiven Zustand wechselnden Funksystems,

Fig. 5      verschiedene von einer Funkstation eines Funksystems während der Prüfung, ob ein Teilfrequenzbereich des vorgegebenen Frequenzbereiches belegt ist,

Fig. 6      eine durch eine zweite Funkstation eines Funksystems erweiterte Funkausbreitungszone,

Fig. 7      ein Blockschaltbild einer Funkstation und

Fig. 8      ein Blockschaltbild eines in der Fig. 7 gezeigten Funkteils und Energiedetektors.

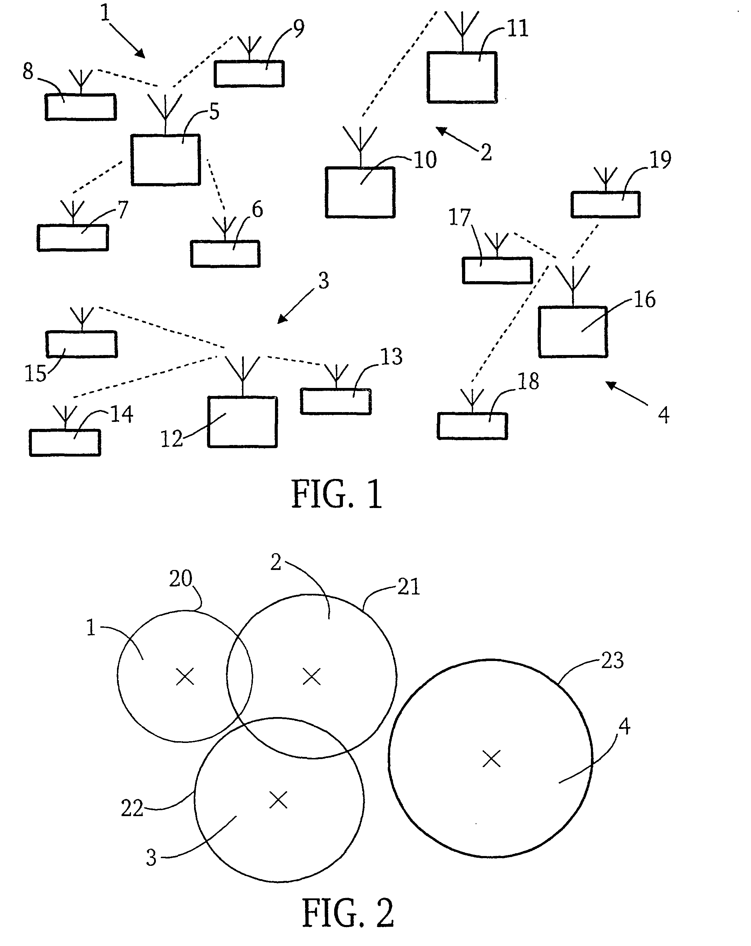

In Fig. 1 ist eine Kommunikationsumgebung mit mehreren Funksystemen 1 bis 4 dargestellt. Das Funksystem 1 enthält beispielsweise fünf Funkstationen 5 bis 9, das Funksystem 2 zwei Funkstationen 10 und 11, das Funksystem 3 vier Funkstationen 12 bis 15 und das Funksystem 4 vier Funkstationen 16 bis 19. Die Funkstationen 5, 10, 11, 12 und 16 sind Fest- oder Basisstationen und die Funkstationen 6 bis 9, 13 bis 15 und 17 bis 19 Mobilstationen. In einem Funksystem werden beispielsweise Funksignale nach dem FDMA-, TDMA- oder CDMA-Verfahren (FDMA = frequency division multiplex access, TDMA = time division multiplex access, CDMA = code division mulitiplex access) übertragen. Ein Funksystem kann auch ein drahtloses lokales Netzwerk (wireless local area network) bilden, welches nach einem TDMA-Verfahren arbeitet und ATM-Zellen (ATM = asynchroner Transfermodus) überträgt. Ferner besteht die Möglichkeit, daß mit zwei oder mehr Funkstationen ein Richtfunkstrecke aufgebaut wird. Eine Richtfunkverbindung (Punkt-zu-Punkt-Verbindung) könnte beispielsweise mit den Feststationen 10 und 11 des Funksystems 2 installiert werden.

Um in einer Kommunikationsumgebung mit mehreren Funksystemen eine weitgehend störungsfreie Übertragung von Signalen zu ermöglichen, dürfen sich die Funksignale der verschiedenen Funksysteme nicht gegenseitig beeinflussen. Dies läßt sich dadurch realisieren, daß sich die Funkausbreitungszonen der Funksysteme nicht überlappen oder daß bei einer Überlappung der Funkausbreitungszonen die Funksysteme jeweils unterschiedliche Teilfrequenzbereiche belegen. Eine Nichtüberlappung von Funkausbreitungszonen bedeutet, daß einerseits die Funkausbreitung außerhalb einer ersten Funkausbreitungszone eines ersten Funksystems so schwach ist, daß eine Störung eines zweiten Funksystems nicht erfolgt, und andererseits innerhalb der Funkausbreitungszone des ersten Funksystem eine Störung durch Signale des zweiten Funksystems nicht erfolgt.

Es sei der Einfachheit halber angenommen, daß ein Funksystem eine kreisförmige Funkausbreitungszone besitzt. In Fig. 2 sind vier Kreise dargestellt, welche die Funkausbreitungszonen 20 bis 23 der vier Funksystemen 1 bis 4 der Fig. 1 darstellen sollen. An der Peripherie eines solchen Kreises ist eine mittlere Energie über einen Zeitraum $T_P$ in einem vorgegebenen Teilfrequenzbereich meßbar, welche einen bestimmten vorgegebenen Schwellwert $\Omega$ aufweist, der im Normalbetrieb andere Funksysteme nicht stört. Hierbei wird aus Vereinfachungsgründen vorausgesetzt, daß der Schwellwert $\Omega$ über den Teilfrequenzbereich weitgehend konstant ist. Zwei Funksysteme mit nicht überlappenden Funkausbreitungszonen können im gleichen Teilfrequenzbereich operieren, da ihre mittleren Energien über den Zeitraum $T_P$ am Rande des Kreises dem Schwellwert $\Omega$ entsprechen und somit eine gegenseitige Beeinflussung nicht erfolgt. Die Funksysteme 1 und 2 und die Funksysteme 2 und 3 können nicht im gleichen Teilfrequenzbereich arbeiten, da sich ihre Funkausbreitungszonen 20 und 21 bzw. 21 und 22 überlappen. Aber es ist möglich, daß die Funksysteme 3 und 4 oder die Funksysteme 2 und 4 oder die Funksysteme 1 und 4 den gleichen Teilfrequenzbereich belegen, da hierbei eine Überlappung der Funkausbreitungszonen 22 und 23 oder der Funkausbreitungszonen 21 und 23 oder der Funkausbreitungszonen 20 und 23 nicht vorliegt.

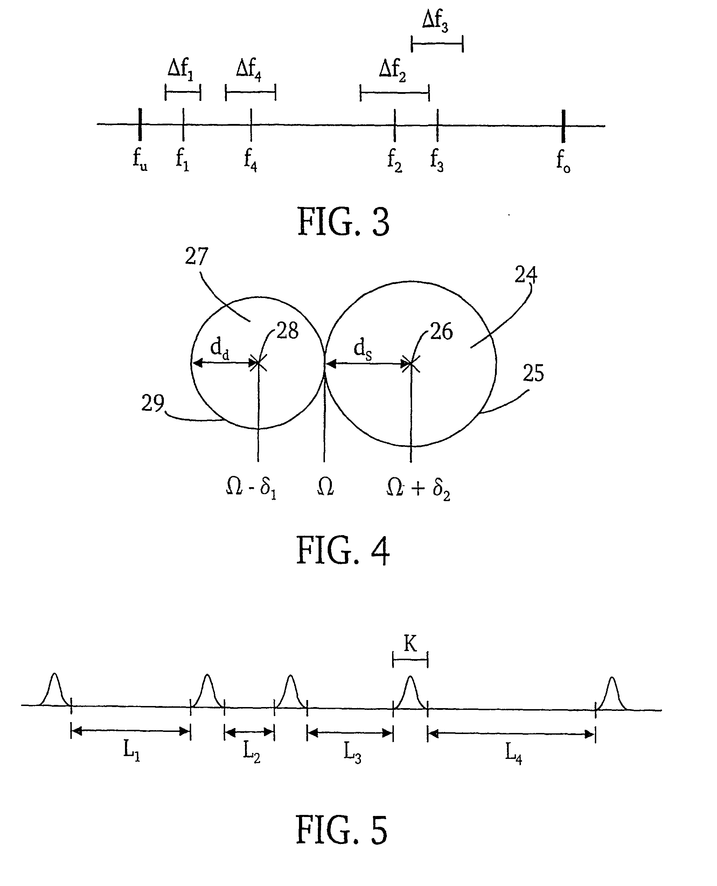

Ein Funksystem 1 bis 4 belegt also in einem vorgegebenen Frequenzbereich einen von den Funkausbreitungszonen der benachbarten Funksysteme abhängigen Frequenzteilbereich zur Signalübertragung und kann nach verschiedenen Verfahren arbeiten. In Fig. 3 ist ein Frequenz- oder Spektralbereich mit einer unteren Frequenz $f_u$ und einer oberen Frequenz $f_o$ dargestellt. Beispielsweise benutzt während eines bestimmten Zeitraumes $t_1 + \Delta t_1$ das Funksystem 1 (Funkausbreitungszone 20) den ersten Teilfrequenzbereich von $f_1 - \Delta f_1/2$ bis $f_1 + \Delta f_1/2$. Die Mittenfrequenz dieses ersten Teilfrequenzbereiches ist $f_1$ und dessen Bandbreite ist $\Delta f_1$. Signale werden in der Regel durch Mischung aus einem Basisband in einen Teilfrequenzbereich verschoben. Das Funksystem 2 muß während eines Zeitraumes $t_2 + \Delta t_2$ ($t_1 \le t_2 \le t_1 + \Delta t_2$) einen zweiten Teilfrequenzbereich von $f_2 - \Delta f_2/2$ bis $f_2 + \Delta f_2/2$ mit der Mittenfrequenz $f_2$ und der Bandbreite $\Delta f_2$ verwenden, wobei und $f_1 + \Delta f_1/2 < f_2 - \Delta f_2/2$ ist, weil die Funkausbreitungszonen 20 und 21 der Funksysteme 1 und 2 sich überlappen.

Ein Funksystem, das während eines vorgegebenen Zeitraumes einen bestimmten Teilfrequenzbereich belegen möchte, muß überprüfen, ob dieser Teilfrequenzbereich für eine vorgegebene Funkausbreitungszone frei ist. Die Größe der Funkausbreitungszone kann dabei fest vorgegeben sein oder zwischen einem minimalen und maximalen Wert $d_{min}$ und $d_{max}$ liegen. Dieser Überprüfungsvorgang wird im folgenden anhand der Fig. 4 erläutert.

Fig. 4 zeigt ein aktives Funksystem 24 mit einer Funkausbreitungszone 25, das einen Teilfrequenzbereich von $f_{akt} - \Delta f_{akt}/2$ bis $f_{akt} + \Delta f_{akt}/2$ mit der Mittenfrequenz $f_{akt}$ und der Bandbreite $\Delta f_{akt}$ belegt. Die Funkausbreitungszone 25 mit dem Radius $d_s$ wird weiter als Schutzzone bezeichnet. An der Peripherie der Schutzzone 25 des aktiven Funksystems ist über den Teilfrequenzbereich $f_{akt}$ die mittlere Energie $\Omega$ über den Zeitraum $T_P$ meßbar. Unter der Voraussetzung, daß eine im wesentlichen nicht bewegliche und im Zentrum der Schutzzone liegende Basis- oder Feststation 26 des Funksystems 24 die mittlere Energie $\Omega$ über den Zeitraum $T_P$ an der Peripherie der Schutzzone liefert, liegt an der Basis- oder Feststation 26 eine mittlere Energie von $\Omega + \delta(d_s)$ für den Zeitraum $T_P$ über den Teilfrequenzbereich von $f_{akt} - \Delta f_{akt}/2$ bis $f_{akt} + \Delta f_{akt}/2$ vor. Der Wert $\delta(d_S)$, der die von dem Radius $d_S$ abhängige Dämpfung der mittlere Abstrahlungsenergie über den Zeitraum $T_P$ der Basis- oder Feststation 26 darstellt, wird durch eine Schätzung oder empirisch ermittelt.

Wenn die Basis- oder Feststation 26 die mittlere Energie $\Omega + \delta(d_S)$ über den Zeitraum $T_P$ abstrahlt, dann nimmt die mittlere Energie $E_S(d)$ über den Zeitraum $T_P$ in der Schutzzone mit zunehmenden Abstand d zur Basis- oder Feststation 26 wie folgt ab:

$$E_s(d) = \Omega + \delta(d_s) - \delta(d).$$

Wird $d = d_S$ gesetzt, wird die mittlere Energie $E_S(d_S)$ über den Zeitraum $T_P$ an der Peripherie der Schutzzone gleich $\Omega$. In der Regel läßt sich $\delta(d_S)$ bzw. $\delta(d)$ nach einer empirisch ermittelbaren oder geschätzten Formel berechnen. Eine einfache Formel lautet folgendermaßen:

$$\delta(d) = \delta(d_0) - 10\, n\, \log_{10}(d/d_0),$$

wobei $d_0$ ein Referenzradius ist und n als Pfadverlust-Exponent mit $3{,}5 \le n \le 5$ bezeichnet wird.

Ein Funksystem 27 mit einer Basis- oder Feststation 28 beabsichtigt in den aktiven Zustand zu wechseln, d.h. Informationen mit Mobil- oder anderen Feststationen des Funksystems auszutauschen. Zuerst muß die Basis- oder Feststation 28 prüfen, ob der vorgesehene Teilfrequenzbereich $f_{det} - \Delta f_{det}/2$ bis $f_{det} + \Delta f_{det}/2$ in der vorgesehenen Funkausbreitungszone 29 frei ist. Die Basis- oder Feststation 28 kann beispielsweise die Größe ihrer aufzubauenden Funkausbreitungszone 29 so festsetzen, daß diese einen maximalen Wert $d_{max}$ aufweist. Diese aufzubauende Funkausbreitungszone 29 wird im folgenden als Detektionszone mit dem Radius $d_d$ bezeichnet. Hierbei wird davon ausgegangen, daß die Basis- oder Feststation 28 im wesentlichen nicht beweglich ist und im Zentrum der kreisförmigen Detektionszone liegt. Unter der Annahme, daß die mittlere Energie über den Zeitraum $T_P$ von Signalen von anderen Funksystems (z.B. Funksystem 24) an der Peripherie der Detektionszone erst dann störend auf die Basis- oder Feststation 28 wirkt, wenn diese größer oder gleich $\Omega$ ist, beträgt die mittlere Störenergie über den Zeitraum $T_P$ an der Basis- oder Feststation 28 mindestens $\Omega - \delta(d_d)$, wobei $\delta(d_d)$ die Dämpfung der Signale von anderen Funksystemen innerhalb der Detektionszone ist. In der Regel läßt sich $\delta(d_d)$ nach der schon oben angegebenen, empirisch ermittelbaren oder geschätzten Formel berechnen:

$$\delta(d_d) = \delta(d_0) - 10\, n\, \log_{10}(d_d/d_0).$$

Falls sich die Teilfrequenzbereiche der Funksysteme 24 und 27 überschneiden ($f_{akt} + \Delta f_{akt}/2 \geq f_{det} - \Delta f_{det}/2$ oder $f_{akt} - \Delta f_{akt}/2 \leq f_{det} + \Delta f_{det}/2$), dürfen sich die Detektionszone 29 des detektierenden Funksystems 27 und die Schutzzone 25 des bestehenden Funksystems nicht überlappen. Wird von der Basis- oder Feststation 28 innerhalb der Detektionszone 29 eine mittlere Störenergie über den Zeitraum $T_P$ größer als $\Omega - \delta(d_d)$ innerhalb des Frequenzbereiches $f_{det} - \Delta f_{det}/2$ bis $f_{det} + \Delta f_{det}/2$ gemessen, so muß entweder die Detektionszone durch Verminderung von $d_d$ vermindert werden oder ein anderer Teilfrequenzbereich gewählt werden. Nach der Verminderung der Detektionszone wird dann wieder überprüft, ob sich die Detektionszone 29 und die Schutzzone 25 weiterhin überlappen. Ist ein minimaler Wert $d_{min}$ für die Größe der Detektionszone 29 erreicht und die Detektionszone 29 und die Schutzzone 25 überlappen sich weiterhin muß ein anderer Teilfrequenzbereich gewählt werden. Die nach möglicherweise mehreren Versuchen gefundene größte mögliche Detektionszone für eine Teilfrequenz, die nicht durch andere Funksysteme belegt ist, wird die Schutzzone für das betreffende und aktivierte Funksystem.

Bei der folgenden Erläuterung der Suche eines anderen Teilfrequenzbereiches wird vorausgesetzt, daß die Detektionszone nicht veränderbar ist ($d_d$ = const.). Beispielsweise sind die beiden Funksysteme 1 und 2 (vgl. Fig. 1 und 2) aktiv und das Funksystem 3 möchte während eines Zeitraumes $t_3 + \Delta t_3$, wobei $t_2 < t_3 < t_2 + \Delta t_2$ ist, einen dritten Teilfrequenzbereich von von $f_3 - \Delta f_3/2$ bis $f_3 + \Delta f_3/2$ mit der Mittenfrequenz $f_3$ und der Bandbreite $\Delta f_3$ verwenden. Der dritte Teilfrequenzbereich mit der Mittenfrequenz $f_3$ überschneidet dabei den zweiten Teilfrequenzbereich mit der Mittenfrequenz $f_2$, wobei z. B. $f_3 - \Delta f_3/2 < f_2 + \Delta f_2/2$ gelten soll. Außerdem überlappen sich die Funkausbreitungszone 21 (Schutzzone) des Funksystems 2 und die Detektionszone 22 (vorgesehene Funkausbreitungszone) des Funksystems 3.

Die Basisstation 12 des Funksystems 3 für den gegebenen Detektionszonenradius $d_d$ stellt fest, daß der von ihr ausgewählte dritte Teilfrequenzbereich zumindest teilweise von einem fremden Funksystem benutzt wird (Funksystem 2 mit dem zweiten Teilfrequenzbereich). Ob ein Teilfrequenzbereich belegt ist, wird von der Basisstation 12 durch Messung der mittlere Energie über den Zeitraum $T_P$ in dem gewünschten Teilfrequenzbereich ermittelt. Ein Teilfrequenzbereich wird dabei als frei oder nicht belegt angesehen, wenn die empfangene mittlere Störenergie über den Zeitraum $T_P$ um den empirisch ermittelten oder geschätzten Wert $\delta(d_d)$ geringer als der Schwellwert $\Omega$ ist.

Ist ein Teilfrequenzbereich belegt, prüft die Basisstation des Funksystems 3 in einem anderen Teilfrequenzbereich, ob dieser durch ein anderes Funksystem belegt ist. Beispielsweise kann die Basisstation 12 messen, ob der zwischen dem ersten und zweiten Teilfrequenzbereich liegende vierte Teilfrequenzbereich $f_4 - \Delta f_4/2$ bis $f_4 + \Delta f_4/2$ mit der Mittenfrequenz $f_4$ und der Bandbreite $\Delta f_4$ frei ist.

Es kann vorkommen, daß gleichzeitig zwei Basis- oder Feststationen A und B unterschiedlicher Funksysteme auf Teilfrequenzbereiche zur Übertragung von Nachrichten zugreifen wollen, die sich zumindest teilweise überschneiden. Beide Basis- oder Feststationen A und B haben zuvor festgestellt, daß die von Ihnen gewünschten Teilfrequenzbereiche innerhalb ihrer Detektionszonen mit den Radien $d_A$ und $d_B$ nicht belegt sind. Um Kollisionen in einem solchen Fall zu vermeiden schließt sich an die oben geschilderte erste Phase oder Detektionsphase eine zweite Phase oder Kollisionsvermeidungsphase an. In dieser zweiten Phase sendet eine Basis- oder Feststation während aufeinanderfolgender Zeitabschnitte auf den gewünschten Teilfrequenzbereich begrenzte und an die Größe der Detektionszone angepaßte Impulse aus. Die Impulse werden in der Regel durch Mischung aus dem Basisband in den Teilfrequenzbereich verschoben und weisen in dem gewünschten Teilfrequenzbereich Spektralwerte mit einer mittleren Energie auf, die um den Wert $\delta(d_A)$ bzw. $\delta(d_B)$ größer als der Schwellwert $\Omega$ ist, damit die mittlere Energie über den Zeitraum $T_P$ an der Peripherie der zu bildenden Schutzzonen mit den Radien $d_A$ bzw. $d_B$ gleich $\Omega$ ist. Der Wert $\delta(d_A)$ bzw. $\delta(d_B)$ legt, wie oben geschildert, die Funkausbreitungszone bzw. Schutzzone um die Basis- oder Feststation A bzw. B fest. Der Zeitabschnitt von zwei aufeinanderfolgenden Impulsen darf einen minimalen Wert $t_{min}$ und einen maximalen Wert $t_{max}$ nicht unter- bzw. überschreiten. Gleichzeitig prüft eine Impulse aussendende Basis- oder Feststation während der Zeit, in der sie keinen Impuls aussendet, ob die gemessene mittlere Energie in dem gewünschten Teilfrequenzbereich in dem Zeitraum $T_P$ um $\delta(d_A)$ bzw. $\delta(d_B)$ kleiner als der Schwellwert $\Omega$ ist. Der Zeitraum $T_P$ muß dabei größer sein als der maximal mögliche Wert $t_{max}$ zwischen zwei aufeinanderfolgenden Impulsen.

Wie in Fig. 5 gezeigt, hat ein von einer Basis- oder Feststation während der zweiten Phase ausgesendeter Impuls eine vorgegebene Dauer K. Zwei aufeinanderfolgende Impulse weisen einen zeitlichen Abstand von $L_i$, i = ... , -1, 0, 1, 2, 3, ..., auf, wobei

$$L_i = P + n\,K$$

ist. P ist der mittlere zeitliche Abstand zwischen zwei aufeinanderfolgenden Impulsen (Referenzwert) und wird durch folgenden Ausdruck definiert:

$$P = (t_{max} - t_{min})/2.$$

n ist eine in einem Zufallsprozeß ermittelte ganze Zahl (-N, ... , -1, 0, 1, ... , N). Bei der Ermittlung der Zufallszahl n muß beachtet werden, daß $t_{min} < L_i < t_{max}$ gilt und somit $L_{min} = P - N K$ und $L_{max} = P + N K$ ist. In Fig. 5 sind fünf, von einer Basis- oder Feststation ausgestrahlte Impulse dargestellt. Zwischen den jeweiligen Impulsen bestehen die unterschiedlichen und durch einen Zufallsprozeß bestimmten zeitlichen Abstände $L_1$, $L_2$, $L_3$, und $L_4$.

Aufgrund des durch den Zufallsprozeß bestimmten zufälligen zeitlichen Abstandes zwischen zwei aufeinanderfolgenden Impulsen ist die Wahrscheinlichkeit gering, daß zwei Basis- oder Feststationen zur gleichen Zeit Impulse aussenden. Die Wahrscheinlichkeit wird mit der Anzahl der ausgesendeten Impulse immer geringer. Eine Basis- oder Feststation sollte mindestens drei aufeinanderfolgende Impulse aussenden, bevor sie von der zweiten Phase in eine dritte Phase (Normalphase) unter der Voraussetzung eintritt, daß keine andere Basis- oder Feststation den gewünschten Teilfrequenzbereich belegen möchte. Es ist aber auch möglich, daß nur zwei Impulse ausgesendet werden.

In der zweiten Phase beginnt eine Basis- oder Feststation nach Beendigung eines von Ihr ausgesendeten Impulses mit der Detektion, ob eine Basis-oder Feststation eines anderen Funksystems in dem gewünschten Frequenzbereich ein Signal ausstrahlt. Dieser Detektionsprozeß wiederholt sich mit der von dem Sendeprozeß unabhängigen Periode $T_P$ unter der Berücksichtigung, daß eine Basis- oder Feststation die mittlere Energie über den Zeitraum $T_P$ ihres eigenen ausgestrahlten Impuls nicht detektieren kann und soll.

Falls eine Basis- oder Feststation feststellt, daß eine weitere Basis- oder Feststation den gewünschten Teilfrequenzbereich zur Übertragung verwenden möchte und sich die Detektionszonen der beiden Funksysteme überlappen, wird die zweite Phase beendet und in die erste Phase zurückgesprungen. Eine Basis- oder Feststation prüft dann nach einer zufällig gewählten Pause, ob ein anderer Teilfrequenzbereich frei ist oder zu einem späteren Zeitpunkt, ob der bisher belegte Teilfrequenzbereich frei ist.

Ist keine Kollision festgestellt worden, dann wird die zuletzt gewählte Detektionszone die Schutzzone des Funksystems, d.h. $d_S = d_d$ , und in die dritte Phase gewechselt. In der dritten Phase nimmt die Basis- oder Feststation eines Funksystems den ausgewählten Teilfrequenzbereich für die Kommunikation mit den Mobil- oder Feststationen des Funksystems in Anspruch. Um die Belegung des Teilfrequenzbereiches oder Störungen durch ein anderes Funksystem zu verhindern und um die vorher beschriebene Detektion durch andere Funksysteme zu ermöglichen, ist es erforderlich, daß eine in der dritten Phase befindliche Basis- oder Feststation den Basis- oder Feststationen der anderen Funksysteme anzeigt, daß der von ihr verwendete Teilfrequenzbereich belegt ist. Es müssen also von der Basis- oder Feststation Signale ausgesendet werden, deren mittlere Energie über den Zeitraum $T_P$ in dem betreffenden Teilfrequenzbereich um den empirischen oder geschätzten Wert $\delta(d_S)$ über dem Schwellwert $\Omega$ liegt, damit an der Peripherie der Schutzzone die mittlere Energie über den Zeitraum $T_P$ gleich $\Omega$ ist. Dies kann dadurch realisiert werden, daß zusätzlich zu den Nutzsignalen, die während des Zeitraumes $T_P$ kleiner als der Wert $\Omega + \delta(d_S)$ sind, Impulse ausgesendet werden. Die Summe der mittleren Energien aus den Nutzsignalen und den Impulsen beträgt $\Omega + \delta(d_S)$ während des Zeitraumes $T_P$. Damit außerhalb der Schutzzone ein anderes Funksystem nicht gestört wird, muß gewährleistet werden, daß die mittlere Energie der gesendeten Nutzsignale während des Zeitraumes $T_P$ immer kleiner als oder gleich $\Omega + \delta(d_S)$ bleibt.

Die oben beschriebenen Vorgänge in der Kommunikationsumgebung mit mehreren Funksystemen sind besonders für eine quasi unveränderliche oder durch andere sich schnell bewegende Objekte (z. B. Kraftfahrzeuge) veränderbare Umgebung geeignet. In einer durch Objekte veränderbaren Umgebung muß die Basis- oder Feststation aus dem Normalbetrieb wiederholt in die zweite Phase zurückkehren und gegebenenfalls die zugehörige Funkausbreitungszone oder Schutzzone und/oder den Teilfrequenzbereich ändern.

In einem Funksystem mit einer Basisstation ist es auch möglich, daß wenigstens eine Mobilstation die bisher erläuterten Maßnahmen der Basisstation durchführt. Hierbei kann eine Mobilstation, falls diese nicht die gesamte eigene Funkausbreitungszone erfassen kann, auf die Hilfe einer oder mehrerer anderer Mobilstationen oder auf die Basisstation zurückgreifen.

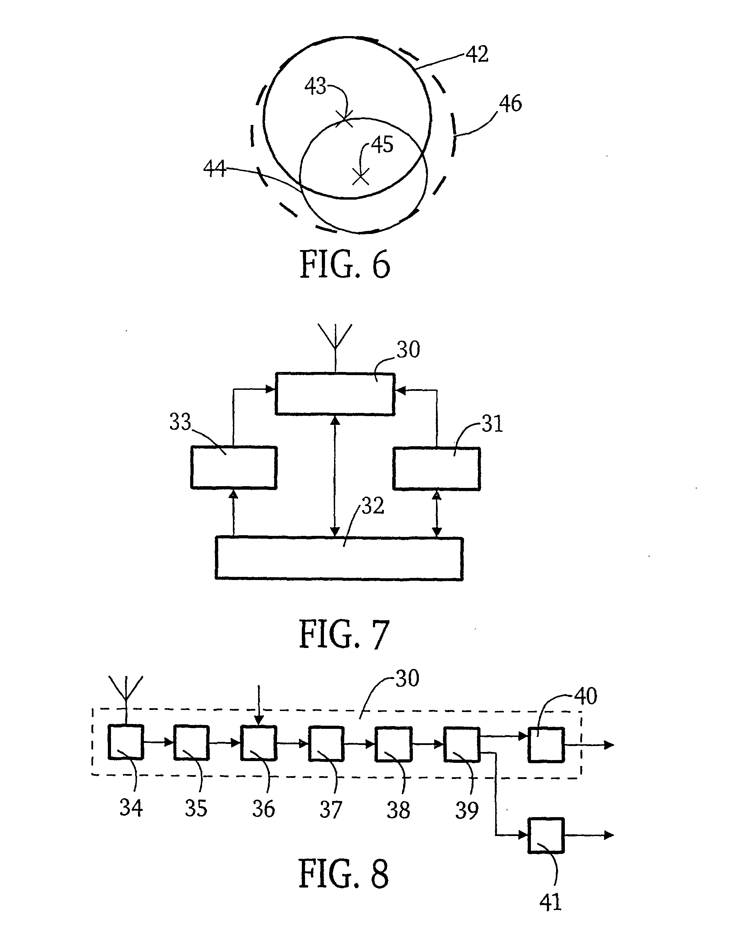

Es ist auch möglich, wie das in Fig. 6 gezeigt ist, die Schutzzone 42 einer Basisstation 43 um die Funkausbreitungszone 44 wenigstens einer zugehörigen Mobilstation 45 zu erweitern. Grundsätzlich muß die Mobilstation 45 die gleichen Schritte bei der Bildung ihrer Schutzzone 44 durchführen, welche die zugehörige Basisstation 43 zur Bildung ihrer Schutzzone 42 benötigt hat. Es ist allerdings zu beachten, daß die Mobilstation 45 nicht die von der Basisstation 43 abgestrahlte mittlere Energie über den Zeitraum $T_P$ mit in die Detektion einbezieht. Dies ist dadurch möglich, weil die Mobilstation 45 und die Basisstation 43 zum gleichen Funksystem gehören und daher Informationen nach einem vorgegebenen Protokoll austauschen können. Die Mobilstation 45 erhält somit eine Information über die Sendezeiten der Basisstation 43 und kann daher Messungen während der Sendepausen der Basisstation 45 durchführen. Die mittleren Energien über den Zeitraum $T_P$ an der Peripherie der Schutzzonen 42 und 44 der Basisstation 43 und der Mobilstation 45 resultiert effektiv in einer erweiterten gemeinsamen Schutzzone 46, weil an der Peripherie dieser erweiterten Schutzzone die Summe der mittleren Energien über den Zeitraum $T_P$ der Basisstation 43 und der Mobilstation 45 auf den Wert $\Omega$ abgesunken ist.

Die Größe $\Omega$ ist die für alle Systeme festgelegte einheitliche Kenngröße für die mittlere Energie über den Zeitraum $T_P$ eines Impulses an der Peripherie der Detektionszone während der ersten und zweiten Phase bzw. an der Peripherie der Schutzzone der dritten Phase.

Allen Funksystemen müssen die einheitlichen Parameter $\Omega$, $T_P$, $t_{min}$ und $t_{max}$ bekannt sein. Alle anderen Parameter, wie z.B. $\delta(d)$, $d_{min}$, $d_{max}$ können jeweils während der drei Phasen systemspezifisch bestimmt werden.

Beim Normalbetrieb eines Funksystems sollte die Sendeleistung bei der Übertragung von Nutzdaten der Stationen so gewählt sein, daß dadurch eine Funkausbreitungszone aufgebaut wird, die kleiner als die Schutzzone ist. Hierdurch wird auch die Störung von benachbarten Systemen sicher verhindert.

Bisher ist aus Vereinfachungsgründen davon ausgegangen worden, daß eine Funkausbreitungszone kreisförmig ist. Dies tritt in der Realität jedoch praktisch kaum auf, da eine Funkausbreitungszone von örtlichen Bedingungen abhängig ist, wie z.B. von der Ausrichtung der Antenne der Basis- oder Feststation oder von Hindernissen. An den oben angegebenen Erläuterungen zur Schutzzone ändert dies jedoch nichts, falls ferner vorausgesetzt wird, daß die zu einem Funksystem gehörenden Funkstationen innerhalb einer kleineren Zone als durch die von der Basis- oder Feststation festgelegten Schutzzone kommunizieren dürfen. Diese durch die Basis- oder Feststation festgelegte Schutzzone kann auch als theoretische Schutzzone und die durch örtliche Bedingungen verkleinerte Schutzzone kann als eigentliche Schutzzone bezeichnet werden. Innerhalb der eigentlichen Schutzzone ist die von einer Funkstation empfangene mittlere Energie der zugehörigen Basis- oder Feststation während des Zeitraumes $T_P$ größer als der Schwellwert $\Omega$ und an der Peripherie gleich $\Omega$. Um zu gewährleisten, daß alle zu einem Funksystem gehörenden Funkstationen sich immer innerhalb der eigentlichen Schutzzone befinden, muß die von einer Funkstation (Mobil- oder Feststation) gemessene mittlere Energie während des Zeitraumes Tp, die von der Basis- oder Feststation abgestrahlt wird, größer als $\Omega$ sein. Wenn sich die Funkstation innerhalb der eigentlichen Schutzzone befindet, darf sie mit anderen Funkstationen (andere Mobilstationen und/oder Basisstation oder andere Feststationen desselben Funksystems) kommunizieren. Eine Messung ist aber nur dann möglich, wenn die Funkstationen eines Funksystems ein gemeinsames Protokoll verwenden, wodurch die Zeitabläufe der gesendeten Nutzsignale und Impulse innerhalb eines Funksystems bekannt sind.

Die Parameter $\delta(d)$ und $\Omega$ können auch frequenzabhängig sein. Dann ist ein Teilfrequenzbereich in M Grundfrequenzeinheiten $df_i$ aufzuteilen. Für jede Grundfrequenzeinheit $df_i$ kann eine frequenzabhängige Größe $\Omega(df_i)$ und $\delta(d, df_i)$ definiert werden. Die mittlere Energie über den Zeitraum $T_P$ eines Teilfrequenzbereiches ergibt sich aus der Summe der Größen $\Omega(df_i)$ und $\delta(d, df_i)$ über alle M Grundfrequenzeinheiten dieses Teilfrequenzbereiches.

In Fig. 7 ist ein Blockschaltbild einer Funkstation 5 bis 18 mit einem Funkteil 30, einem Energiedetektor 31, einer Steuerschaltung 32 und einem Impulsgenerator 33 dargestellt. Die Steuerschaltung 32, welche beispielsweise einen Mikroprozessor enthält, stellt das Funkteil 30, welcher zum Senden und Empfangen von Funksignalen dient, auf eine Mittenfrequenz $f_i$ und eine Bandbreite $\Delta f_i$ (Teilfrequenzbereich) ein. Dabei wird durch Mischung von dem Funkteil 30 die von dem Impulsgenerator 33 empfangenen Impulse und die von der Steuerschaltung 32 empfangenen Nutzdaten aus dem Basisband in den Teilfrequenzbereich mit der Mittenfrequenz $f_i$ verschoben. Ein solches Funkteil 30 kann aber auch so eingerichtet sein, daß es fest auf eine Mittenfrequenz eingestellt ist. Des weiteren steuert die Steuerschaltung 32 auch den Impulsgenerator 33 und empfängt von dem Energiedetektor 31 Meßergebnisse. Dabei ist die Steuerschaltung 32 für die Größe der mittleren Energie über den Zeitraum $T_P$ der auszusendenden Impulse bzw. Nutzdaten verantwortlich.

Während der ersten Phase stellt die Steuerschaltung 32 das Funkteil 30 auf einen gewünschten Teilfrequenzbereich ein. Das Funkteil 30 liefert dem Energiedetektor 31 die empfangenen Signale. Der Energiedetektor 31 mißt für den Radius $d_d$ der Detektionszone die mittlere Energie über den Zeitraum $T_P$ im gewünschten Teilfrequenzbereich und überprüft, ob die gemessene mittlere Energie während des Zeitraumes $T_P$ größer als der Schwellwert $\Omega$ - $\delta(d_d)$ ist. Ist der Schwellwert überschritten wird von dem Energiedetektor 31 ein Detektionssignal an die Steuerschaltung 32 gegeben. Das Detektionssignal gibt an, daß für diese Größe der Detektionszone der gewünschte Teilfrequenzbereich durch wenigstens eine andere Funkstation belegt ist. Dann stellt die Steuerschaltung 32 das Funkteil 30 auf eine andere mittlere Energie (Detektionszone verringert) über den Zeitraum $T_P$ oder auf eine andere Mittenfrequenz $f_i$ und Bandbreite $\Delta f_i$ ein. Anschließend wird wieder mittels des Energiedetektors geprüft, ob der Teilfrequenzbereich für die gewählte Detektionszone frei ist. Ist ein freier Teilfrequenzbereich für die bestimmte Detektionszone gefunden worden, beginnt die zweite Phase.

Die Steuerschaltung 32 veranlaßt den Impulsgenerator 33 zu bestimmten Zeitpunkten für den betrachteten Radius $d_d$ der Detektionszone einen Impuls der Dauer K mit einer mittleren Leistung $(\Omega + \delta(d_d))/K$ zu erzeugen, der dem Funkteil 30 zur Aussendung zugeführt wird. Die Steuerschaltung 32 berechnet nach der oben angegebenen Formel den zeitlichen Abstand $L_i$ zwischen zwei aufeinanderfolgenden Impulsen. Hierbei wird von der Steuerschaltung 32 eine Zufallszahl berechnet. Alle anderen erforderlichen Parameter (z.B. "P") sind in einem Speicher der Steuerschaltung 32 abgelegt. Nach Aussendung eines Impulses gibt das Funkteil 30 die im gewünschten Teilfrequenzbereich empfangenen Signale an den Energiedetektor 31 weiter, der die mittlere Energie für den Zeitraum $T_P$ bestimmt. Stellt der Energiedetektor 31 fest, daß die gemessene mittlere Energie über den Zeitraum $T_P$ den Schwellwert $\Omega$ - $\delta(d_d)$ überschreitet, wird ein Detektionssignal zur Steuerschaltung 32 geliefert, die dann in die erste Phase zurückgeht. In diesem Fall sendet eine andere Funkstation Signale in dem gewünschten Teilfrequenzbereich aus. Wird jedoch nach Aussendung von beispielsweise drei aufeinanderfolgenden Impulsen eine Belegung des gewünschten Teilfrequenzbereiches von der Steuerschaltung 32 nicht festgestellt, wird in die dritte Phase gewechselt. Der Radius $d_S$ der Schutzzone wird gleich dem letzten Radius $d_d$ der Detektionszone gesetzt ($d_S = d_d$).

In der dritten Phase müssen, wie oben beschrieben, weiterhin von dem Impulsgenerator 33 nach Ansteuerung durch die Steuerschaltung 32 Impulse zusätzlich zu Nutzdaten ausgesendet werden, wenn die mittlere Energie der Nutzdaten innerhalb des Zeitraumes $T_P$ kleiner als $\Omega + \delta(d_S)$ ist. Wie oben schon ausführlich gezeigt, beträgt die Summe der mittleren Energien aus Nutzdaten und zusätzlichen Impuls $\Omega + \delta(d_S)$ während des Zeitraumes oder der Periode $T_P$. Die Nutzdaten werden in der impulsfreien Zeit nach Zuführung duch die Steuerschaltung 32 von dem Funkteil 30 gesendet. Die Nutzsignale können von anderen Einheiten der Funkstation oder von externen Einheiten kommen. Ebenso ist es möglich, daß die Steuerschaltung 32 von einer übergeordneten Steuerschaltung gesteuert wird. In diesem Fall legt die übergeordnete Steuerschaltung den Startpunkt der ersten Phase und das Ende der dritten Phase fest.

Das in Fig. 7 eingeführte Funkteil 30 und Energiedetektor 31 werden im folgenden mit Hilfe des Blockschaltbildes der Fig. 8 näher erläutert. Das Funkteil 30 enthält einen zur Filterung der von der Antenne empfangenen Signale einen Vorfilter 34, von dem die gefilterten empfangenen Signale über einen rauscharmen Verstärker 35, einen Mischer 36, ein Zwischenfrequenz-Filter 37 und einen Zwischenfrequenz-Verstärker 38 zu einem Kanalfilter 39 geliefert werden. Außer den Schaltungselementen 34 bis 39 enthält das Funkteil 30 einen Demodulator 40, der die demodulierten Nutzdaten zu weiteren hier nicht dargestellten Schaltungselementen leitet. Der Energiedetektor 31 besteht aus einem Signalpegeldetektor 41, welcher die von dem Kanalfilter 39 abgegebenen Daten detektiert und das Detektionsergebnis der Steuerschaltung 32 zuführt.

**Patentansprüche**

1. Kommunikationssystem mit mehreren Funksystemen, die jeweils wenigstens eine Funkstation enthalten,
   **dadurch gekennzeichnet,**
   **daß** die Funkstation

   - in einer ersten Phase jeweils vor einer Nutzsignalübertragung vorgesehen ist eine Prüfung durchzuführen, ob ein bestimmter Teilfrequenzbereich innerhalb eines vorgegebenen Frequenzbereiches für eine gewählte Größe einer Funkausbreitungszone frei ist,
   - in einer zweiten Phase, falls der bestimmte Teilfrequenzbereich für die gewählte Größe der Funkausbreitungszone frei ist, wenigstens zur Aussendung von zwei auf den bestimmtem Teilfrequenzbereich begrenzten Impulsen zu zufälligen Zeitpunkten und zur Kollisionsvermeidung vorgesehen ist, falls ein anderes Funksystem den bestimmten Teilfrequenzbereich in einer überlappenden Funkausbreitungszone zum gleichen Zeitpunkt belegt hat, und
   - in einer dritten Phase, falls der bestimmte Teilfrequenzbereich für die gewählte Größe der Funkausbreitungszone frei ist und keine Kollision detektierbar ist, wenigstens zur Aussendung von auf den bestimmten Teilfrequenzbereich begrenzte Nutzsignale vorgesehen ist.

2. Kommunikationssystem nach Anspruch 1,
   **dadurch gekennzeichnet,**
   **daß** wenigstens eine Funkstation eines Funksystems wenigstens vorgesehen ist durch die abgestrahlte Energie des Funksystems die Größe der Funkausbreitungszone des Funksystems zu bestimmen und daß eine Funkstation eines Funksystems vorgesehen ist einen Teilfrequenzbereich als frei zu erkennen, wenn einerseits die abgestrahlte Energie außerhalb seiner Funkausbreitungszone so schwach ist, daß eine Störung eines anderen Funksystems nicht vorliegt, und andererseits das Funksystem innerhalb der Funkausbreitungszone nicht durch die abgestrahlte Energie eines anderen Funksystems gestört wird.

3. Kommunikationssystem nach Anspruch 1,
   **dadurch gekennzeichnet,**
   **daß** wenigstens eine Funkstation eines Funksystems nach der Feststellung in der ersten Phase, daß der bestimmte Teilfrequenzbereich innerhalb des vorgegebenen Frequenzbereiches für die gewählte Größe einer Funkausbreitungszone belegt ist, nach einem zufällig bestimmten Zeitraum vorgesehen ist eine erneute Prüfung entweder mit einer verminderten Größe der Funkausbreitungszone des Funksystems oder mit einem anderen Teilfrequenzbereiches durchzuführen.

4. Kommunikationssystem nach Anspruch 1,
**dadurch gekennzeichnet,**
**daß** wenigstens eine Funkstation eines Funksystems in der dritten Phase zusätzlich zu den Nutzsignalen zur Aussendung von Impulsen vorgesehen ist, wenn die mittlere abgestrahlte Energie während eines vorgegebenen Zeitraumes geringer als die Energie ist, durch welche die Größe der Funkausbreitungszone bestimmt wird.

5. Kommunikationssystem nach Anspruch 1,
**dadurch gekennzeichnet,**
**daß** jeweils wenigstens eine Funkstation jedes Funksystems zur Speicherung der mittleren Energie über einen vorgegebenen Zeitraum an der Peripherie einer Funkausbreitungszone, des vorgegebenen Zeitraums und des minimalen und maximalen Zeitpunkts zwischen zwei aufeinanderfolgenden Impulsen zumindest während der zweiten Phase vorgesehen ist.

6. Kommunikationssystem nach Anspruch 1,
**dadurch gekennzeichnet,**
**daß** wenigstens eine Funkstation eines Funksystems vorgesehen ist für eine gewählte Größe der Funkausbreitungszone die abzustrahlende mittlere Energie über einen vorgegebenen Zeitraum über eine geschätzte oder empirisch ermittelte Formel zu bestimmen.

7. Kommunikationssystem nach Anspruch 1,
**dadurch gekennzeichnet**
**daß** wenigstens eine Funkstation eines Funksystems vorgesehen ist, für eine gewählte Größe der Funkausbreitungszone die empfangene mittlere Störenergie über einen vorgegebenen Zeitraum über eine geschätzte oder empirisch ermittelte Formel zu bestimmen.

8. Kommunikationssystem nach Anspruch 2,
**dadurch gekennzeichnet,**
**daß** jede Funkstationen eines Funksystems vorgesehen ist eine Energiedetektion durchzuführen und
**daß** eine Funkstation nur dann zur Kommunikation mit anderen Funkstationen des Funksystems vorgesehen ist, wenn die Energiedetektion ergibt, daß die Funkstation sich innerhalb der Funkausbreitungszone des Funksystems befindet.

9. Kommunikationssystem nach Anspruch 1,
**dadurch gekennzeichnet,**
**daß** eine Funkstation wenigstens ein Funkteil zum Senden und Empfangen von Funksignalen, einen Energiedetektor zur Messung der mittleren Energie der empfangenen Funksignale über einem vorgegebenen Zeitraum, einen Impulsgenerator zum Erzeugen von über das Funkteil ausgesendeten Impulsen und eine Steuerschaltung zur Steuerung des Funkteils und des Impulsgenerators und zur Auswertung von Meßergebnissen des Energiedetektors enthält.

10. Funkstation eines Funksystems, welche

— in einer ersten Phase jeweils vor einer Nutzsignalübertragung vorgesehen ist eine Prüfung durchzuführen, ob ein bestimmter Teilfrequenzbereich innerhalb eines vorgegebenen Frequenzbereiches für eine gewählte Größe einer Funkausbreitungszone frei ist,

— in einer zweiten Phase, falls der bestimmte Teilfrequenzbereich für die gewählte Größe der Funkausbreitungszone frei ist, wenigstens zur Aussendung von zwei auf den bestimmtem Teilfrequenzbereich begrenzten Impulsen zu zufälligen Zeitpunkten und zur Kollisionsvermeidung vorgesehen ist, falls ein anderes Funksystem den bestimmten Teilfrequenzbereich in einer überlappenden Funkausbreitungszone zum gleichen Zeitpunkt belegt hat, und

— in einer dritten Phase, falls der bestimmte Teilfrequenzbereich für die gewählte Größe der Funkausbreitungszone frei ist und keine Kollision detektierbar ist, wenigstens zur Aussendung von auf den bestimmten Teilfrequenzbereich begrenzte Nutzsignale vorgesehen ist.

11. Verfahren zur Belegung eines Teilfrequenzbereiches in einem vorgegebenen Frequenzbereich durch ein zu einer Kommunikationsumgebung gehörendes Funksystem, das wenigstens eine Funkstation enthält, welche

— in einer ersten Phase jeweils vor einer Nutzsignalübertragung prüft, ob ein bestimmter Teilfrequenzbereich für eine gewählte Größe einer Funkausbreitungszone frei ist,

— in einer zweiten Phase, falls der bestimmte Teilfrequenzbereich für die gewählte Größe der Funkausbreitungszone frei ist, wenigstens zwei auf den bestimmtem Teilfrequenzbereich begrenzte Impulse zu zufälligen Zeitpunkten aussendet und eine Kollision vermeidet, falls ein anderes Funksystem den bestimmten Teilfrequenzbereich in einer überlappenden Funkausbreitungszone zum gleichen Zeitpunkt belegt hat, und

— in einer dritten Phase, falls der bestimmte Teilfrequenzbereich für die gewählte Größe der Funkausbreitungszone frei ist und keine Kollision detektierbar ist, wenigstens von auf den bestimmten Teilfrequenzbereich begrenzte Nutzsignale aussendet.

**Claims**

1. A communication system with a plurality of radio systems which have each at least one radio station, which

   - in a first phase, prior to each transmission of a useful signal, is provided to check whether a specific sub-frequency range in a predefined frequency range for a selected size of a radio propagation area is free,
   - in a second phase, if the specific sub-frequency range for the selected size of the radio propagation area is free, to transmit at least two pulses restricted to the specific sub-frequency range at random instants and to avoid collisions if another radio system has seized the specific sub-frequency range in an overlapping radio propagation area at the same time, and
   - in a third phase, if the specific sub-frequency range for the selected size of the radio propagation area is free and no collision can be detected, to transmit at least useful signals restricted to the specific sub-frequency range.

2. A communication system as claimed in claim 1, **characterized in that** at least one radio station of a radio system is provided to determine the size of the radio propagation area of the radio system at least by its radiated energy and **in that** a radio station of a radio system is provided to detect a sub-frequency area as free when, on the one hand, the radiated energy outside its radio propagation area is so weak that an interference of another radio system does not occur and, on the other hand, the radio system in the radio propagation area does not experience interference caused by the radiated energy of another radio system.

3. A communication system as claimed in claim 1, **characterized in that** at least one radio station of a radio system, after detecting in the first phase that the specific sub-frequency range in the predefined frequency range for the selected size of the radio propagation area is occupied after a randomly determined time period is provided to carry out a new check either with a reduced size of the radio propagation area of the radio system or with another sub-frequency range.

4. A communication system as claimed in claim 1, **characterized in that** at least one radio station of a radio system is provided to transmit pulses in addition to the useful signals in the third phase when the average radiated energy during a predefined time period is less than the energy which determines the size of the radio propagation area.

5. A communication system as claimed in claim 1, **characterized in that** at least one radio station of each radio system is provided to store for a predefined time period the average energy on the periphery of a radio propagation area, of the predefined time period and of the minimum and maximum instant between two successive pulses at least in the second phase.

6. A communication system as claimed in claim 1, **characterized in that** at least one radio station of a radio system is provided to determine via an estimated or empirically determined formula the average energy to be radiated during a predefined period of time for a selected size of the radio propagation area.

7. A communication system as claimed in claim 1, **characterized in that** at least one radio station of a radio system is provided to determine via an estimated or empirically determined formula the received average interference energy during a predefined period of time for a selected size of the radio propagation area.

8. A communication system as claimed in claim 2, **characterized in that** each radio station of a radio system is provided to carry out an energy detection and **in that** a radio station does not communicate with other radio stations of the radio system until the energy detection proves that the radio station is located in the radio propagation area of the radio system.

9. A communication system as claimed in claim 1, **characterized in that** a radio station comprises at least a radio section for transmitting and receiving radio signals, an energy detector for measuring the average energy of the received radio signals during a predefined time period, a pulse generator for generating pulses transmitted via the radio section and a control circuit for controlling the radio section and the pulse generator and for evaluating measuring results of the energy detector.

10. A radio station of a radio system which

    - in a first phase, prior to each transmission of a useful signal, is provided to check whether a specific sub-frequency range in a predefined frequency range for a selected size of a radio propagation area is free,
    - in a second phase, if the specific sub-frequency range for the selected size of the radio propagation area is free, to transmit at least two pulses restricted to the specific sub-frequency range at random instants and to avoid collisions if another radio system has seized the specific sub-frequency range in an overlapping radio propagation area at the same time, and

- in a third phase, if the specific sub-frequency range for the selected size of the radio propagation area is free and no collision can be detected, to transmit at least useful signals restricted to the specific sub-frequency range.

11. A method of occupying a sub-frequency range in a predefined frequency range by a radio system belonging to a communication environment, which radio system includes at least one radio station which

- in a first phase, prior to each transmission of a useful signal, is provided to check whether a specific sub-frequency range for a selected size of a radio propagation area is free,
- in a second phase, if the specific sub-frequency range for the selected size of the radio propagation area is free, to transmit at least two pulses restricted to the specific sub-frequency range at random instants and to avoid a collision if another radio system has seized the specific sub-frequency range in an overlapping radio propagation area at the same time, and
- in a third phase, if the specific sub-frequency range for the selected size of the radio propagation area is free and no collision can be detected, to transmit at least useful signals restricted to the specific sub-frequency range.

**Revendications**

1. Système de communication avec une pluralité de systèmes radio qui contiennent chacun au moins une station radio,
   **caractérisé en ce**
   **que** la station radio

   - est respectivement prévue dans une première phase avant une transmission de signaux utiles pour contrôler si une gamme de fréquence partielle déterminée est libre dans une gamme de fréquence préalablement déterminée pour une taille souhaitée d'une zone de couverture radio;
   - dans une deuxième phase, si la gamme de fréquence partielle déterminée est libre pour la taille souhaitée de la zone de couverture radio, est prévue au moins pour la diffusion de deux impulsions limitées sur la gamme de fréquence partielle déterminée à des moments aléatoires et pour la prévention des collisions, si un autre système radio a occupé la gamme de fréquence partielle déterminée dans une zone de couverture radio se chevauchant au même moment, et

- dans une troisième phase, si la gamme de fréquence partielle déterminée est libre pour la taille souhaitée de la zone de couverture radio et aucune collision ne peut être détectée, est prévue au moins pour la transmission de signaux utiles limités sur la gamme de fréquence partielle déterminée.

2. Système de communication selon la revendication 1,
   **caractérisé en ce**
   **qu'**au moins une station radio d'un système radio est au moins prévue pour déterminer la taille de la zone de couverture radio du système radio par l'énergie rayonnée du système radio et qu'une station radio d'un système radio est prévue pour reconnaître une gamme de fréquence partielle comme libre lorsque, d'une part, l'énergie rayonnée en dehors de sa zone de couverture radio est si faible qu'une perturbation d'un autre système radio n'est pas présente et, d'autre part, le système radio dans le système de radiodiffusion n'est pas perturbé par l'énergie rayonnée d'un autre système radio.

3. Système de communication selon la revendication 1,
   **caractérisé en ce**
   **qu'**au moins une station radio d'un système radio est prévue après la détermination dans la première phase que la gamme de fréquence partielle déterminée est occupée dans la gamme de fréquence préalablement déterminée pour la grandeur choisie d'une zone de couverture radio, après une période déterminée aléatoirement pour effectuer un contrôle, soit avec une taille réduite de la zone de couverture radio du système radio, soit avec une autre gamme de fréquence partielle.

4. Système de communication selon la revendication 1,
   **caractérisé en ce**
   **qu'**au moins une station radio d'un système radio est prévue dans la troisième phase en plus des signaux utiles pour la transmission d'impulsions lorsque l'énergie rayonnée moyenne est inférieure pendant une période préalablement déterminée à l'énergie par laquelle la taille de la zone de couverture radio est déterminée.

5. Système de communication selon la revendication 1,
   **caractérisé en ce**
   **qu'**au moins une station radio de chaque système radio est prévue respectivement pour l'enregistrement de l'énergie moyenne sur une période préalablement déterminée à la périphérie d'une zone de couverture radio, de la période préalablement déterminée et des moments minimal et maximal entre deux impulsions successives, du moins pendant la deuxième phase.

6. Système de communication selon la revendication 1,
   **caractérisé en ce**
   **qu'**au moins une station radio d'un système radio est prévue afin de déterminer, pour une taille choisie de la zone de couverture radio, l'énergie moyenne à rayonner sur une période préalablement déterminée par une méthode estimée ou déterminée empiriquement.

7. Système de communication selon la revendication 1,
   **caractérisé en ce**
   **qu'**au moins une station radio d'un système radio est prévue afin de déterminer, pour une grandeur choisie de la zone de couverture radio, l'énergie perturbatrice moyenne reçue sur une période préalablement déterminée par une formule estimée ou déterminée empiriquement.

8. Système de communication selon la revendication 2,
   **caractérisé en ce**
   **que** chacune des stations radio d'un système radio est prévue afin d'effectuer une détection de l'énergie et qu'une station radio n'est prévue en vue de la communication avec d'autres stations du système radio lorsque la détection de l'énergie révèle que la station radio se trouve à l'intérieur de la zone de couverture radio du système radio.

9. Système de communication selon la revendication 1,
   **caractérisé en ce**
   **qu'**une station radio comprend au moins une partie radio pour la transmission et la réception de signaux radio, un détecteur d'énergie pour la mesure de l'énergie moyenne des signaux radio reçus sur une période préalablement déterminée, un générateur d'impulsions pour la production d'impulsions transmises par l'intermédiaire de la partie radio et un circuit de commande pour la commande de la partie radio et du générateur d'impulsions et pour l'évaluation des résultats de mesure du détecteur d'énergie.

10. Station radio d'un système radio qui

    - est respectivement prévue dans une première phase avant une transmission de signaux utiles pour contrôler si une gamme de fréquence partielle déterminée est libre dans une gamme de fréquence préalablement déterminée pour une taille souhaitée d'une zone de couverture radio;
    - dans une deuxième phase, si la gamme de fréquence partielle déterminée est libre pour la taille souhaitée de la zone de couverture radio, est prévue au moins pour la diffusion de deux impulsions limitées sur la gamme de fréquence partielle déterminée à des moments aléatoires et pour la prévention des collisions, si un autre système radio a occupé la gamme de fréquence partielle déterminée dans une zone de couverture radio se chevauchant au même moment, et
    - dans une troisième phase, si la gamme de fréquence partielle déterminée est libre pour la taille souhaitée de la zone de couverture radio et aucune collision ne peut être détectée, au moins pour la transmission de signaux utiles limités sur la gamme de fréquence partielle déterminée.

11. Procédé d'affectation d'une zone de fréquence partielle dans une gamme de fréquence préalablement déterminée par un système radio appartenant à un environnement de communication qui contient au moins une station radio qui :

    - est respectivement prévue dans une première phase avant une transmission de signaux utiles pour contrôler si une gamme de fréquence partielle déterminée est libre dans une gamme de fréquence préalablement déterminée pour une taille souhaitée d'une zone de couverture radio;
    - dans une deuxième phase, si la gamme de fréquence partielle déterminée est libre pour la taille souhaitée de la zone de couverture radio, est prévue au moins pour la diffusion de deux impulsions limitées sur la gamme de fréquence partielle déterminée à des moments aléatoires et pour la prévention des collisions, si un autre système radio a occupé la gamme de fréquence partielle déterminée dans une zone de couverture radio se chevauchant au même moment, et
    - dans une troisième phase, si la gamme de fréquence partielle déterminée est libre pour la taille souhaitée de la zone de couverture radio et aucune collision ne peut être détectée, au moins pour la transmission de signaux utiles limités sur la gamme de fréquence partielle déterminée.

FIG. 1

FIG. 2

FIG. 3

FIG. 4

FIG. 5

FIG. 6

FIG. 7

FIG. 8